# EUROPÄISCHE PATENTANMELDUNG

(11) **EP 2 746 081 A2**
(43) Veröffentlichungstag der Anmeldung: **25.06.2014**
(21) Anmeldenummer: 13195856.3
(22) Anmeldetag: 05.12.2013
(51) Int. Cl.: B60J 10/02, B60J 10/00

(54) **System zum Montieren eines Anbauteils an eine Fahrzeugscheibe, Anordnung mit einem System, sowie Verfahren zum Montieren eines Anbauteils an eine Fahrzeugscheibe**

(30) Priorität: 19.12.2012 DE 102012112662
(71) Anmelder: REHAU AG + Co, 95111 Rehau (DE)
(72) Erfinder: Schmidt, Peter, 95030 Hof (DE); Schaff, Alexander, 04207 Leipzig (DE)

(57) **Zusammenfassung**

Die vorliegende Erfindung betrifft ein System zum Montieren eines Anbauteils (1) an eine Fahrzeugscheibe (20), umfassend ein Anbauteil (1) mit einem Anschlusselement (2), wobei das Anschlusselement (2) mindestens einen Widerhaken (3) aufweist, ein Profilelement (4) mit einem extrudierten Profilkörper (5) aus einem ersten Kunststoffmaterial, wobei der Profilkörper (5) einen Befestigungsabschnitt (6) zur Befestigung des Profilkörpers (5) an der Fahrzeugscheibe (20) und einen an den Befestigungsabschnitt (6) angrenzenden Aufnahmeabschnitt (7) aufweist, wobei der Aufnahmeabschnitt (7) eine Rastausnehmung (8) zur kraft- und/oder formschlüssigen Aufnahme des Anschlusselementes (2) aufweist, wobei innerhalb der Rastausnehmung (8) mindestens ein weichelastisch verformbares Rückstellelement (9) derart angeordnet und ausgebildet ist, dass das Rückstellelement (9) bei der Montage des Anschlusselementes (2) den Widerhaken (3) übergreift und eine formschlüssige Aufnahme (10) für den Widerhaken (3) ausbildet. Teil der Erfindung ist ferner eine Anordnung mit einem System und Verfahren zum Montieren eines Anbauteils (1).

## Beschreibung

Die vorliegende Erfindung betrifft ein System zum Montieren eines Anbauteils an eine Fahrzeugscheibe, umfassend ein Anbauteil mit einem Anschlusselement, wobei das Anschlusselement mindestens einen Widerhaken aufweist, ein Profilelement mit einem extrudierten Profilkörper aus einem ersten Kunststoffmaterial, wobei der Profilkörper einen Befestigungsabschnitt zur Befestigung des Profilkörpers an der Fahrzeugscheibe und einen an den Befestigungsabschnitt angrenzenden Aufnahmeabschnitt aufweist, wobei der Aufnahmeabschnitt eine Rastausnehmung zur kraft- und / oder formschlüssigen Aufnahme des Anschlusselementes aufweist.

Beispielhaft befindet sich bei Fahrzeugen unterhalb der Fahrzeugfrontscheibe ein Anbauteil in Form einer so genannten Wasserkastenabdeckung, welche von der Scheibe abfließendes Wasser auffängt und seitlich bzw. mittels entsprechender Abflussöffnungen abführt. Zur Montage eines Anbauteils an eine Fahrzeugscheibe werden gattungsgemäße Systeme verwendet, wie diese in der DE 20 2008 006 986 U1 und der DE 20 2008 016 217 U1 offenbart sind. Ein System des Standes der Technik ist jedoch nachteilig, da die anzuschließenden Anbauteile bzw. Anschlusselemente in der Regel eine sehr große Dimensions-Toleranz aufweisen. Dies insbesondere vor dem Hintergrund, dass entsprechende Anbauteile bzw. Anschlusselemente in der Regel Abmessungen von wenigstens 1 Meter aufweisen. In Folge kann es dazu kommen, dass das Anschlusselement innerhalb der Rastausnehmung nicht fest genug gehalten wird. Dies führt beim Betrieb eines entsprechenden Fahrzeuges, welches mit einem System des Standes der Technik versehen ist, zu störenden Klappergeräuschen bzw. zu einem Flattern des Anbauteils im Fahrtwind.

Die Erfindung stellt sich daher die Aufgabe, ein System mit den eingangs beschriebenen Merkmalen anzugeben, das gegenüber dem Stand der Technik Dimensions-Toleranzen des Anbauteils besser ausgleichen kann.

Erfindungsgemäß wird diese Aufgabe dadurch gelöst, dass innerhalb der Rastausnehmung eines gattungsgemäßen Systems mindestens ein weichelastisch verformbares Rückstellelement derart angeordnet und ausgebildet ist, dass das Rückstellelement bei der Montage des Anschlusselements den Widerhaken übergreift und eine formschlüssige Aufnahme für den Widerhaken ausbildet. Vorteilhafterweise wird beim erfindungsgemäßen System der Widerhaken von dem weichelastisch verformbaren Rückstellelement übergriffen und in einer formschlüssigen Aufnahme gehalten, so dass es zu keinem Klappern bzw. Flattern des Anbauteils mehr kommen kann. Aufgrund der Tatsache, dass der Widerhaken quasi selbst die formschlüssige Aufnahme für den Widerhaken ausbildet, werden Dimensions-Toleranzen des Anbauteils bzw. des Anschlusselements durch das erfindungsgemäße System selbständig und ortsunabhängig ausgeglichen. In Folge ist ein erfindungsgemäßes System deutlich toleranter gegenüber den Dimensions-Toleranzen des Anbauteils bzw. des Anschlusselements.

Das Rückstellelement besteht bevorzugt aus einem geschäumten zweiten Kunststoffmaterial bzw. ist bevorzugt aus einem geschäumten zweiten Kunststoffmaterial gebildet. Bei dem zweiten geschäumten Kunststoffmaterial handelt es sich bevorzugt um ein thermoplastisches Elastomer (TPE), insbesondere TPE-V (vernetzte thermoplastische Elastomere auf Olefinbasis, vorzugsweise PP/EPDM). Als thermoplastisches Elastomer können alternativ TPE-O (= Thermoplastische Elastomere auf Olefinbasis, vorzugsweise PP/EPDM), oder TPE-U (= Thermoplastische Elastomere auf Urethanbasis, z. B. Desmopan^{®}, Texin^{®}, Utechllan^{®}) oder TPE-E (= Thermoplastische Polyesterelastomere), oder TPC (= Thermoplastische Copolyester, z. B. Hytrel^{®} oder Riteflex^{®}), oder TPE-S (= Styrol-Blockcopolymere; z.B. SBS, SEBS, SEPS, SEEPS und MBS), oder TPE-A (= Thermoplastische Copolyamide, z.B. PEBAX^{®}) verwendet werden. Weiter bevorzugt kann es sich um einein sogenannten Form-Gedächtnis-Schaum (engl.: "memory foam") aus z.B. einem Polyurethan mit chemischen Zusätzen, welche die Viskosität und Dichte erhöhen handeln. Einen derartigen Polyurethan-Schaum bezeichnet man auch als visko-elastischen Polyurethan-Schaum oder als gering zurückfedernden Polyurethan Schaum (engl.: "low-resilience polyurethane foam" kurz "LRPu"). Derartige Form-Gedächtnis-Schäume werden beispielsweise für sogenannte "Nacken-Kissen" oder für Matratzen verwendet. Ein Handelsname für einen Form-Gedächtnis-Schaum ist beispielhaft TEMPUR^{®}.

Beim dem weichelastisch verformbaren Rückstellelement kann es sich alternativ um eine Hohlstruktur (vergleichbar einem Balg) handeln, die weiter alternativ mit einem vorgenannten geschäumten Kunststoffmaterial gefüllt sein kann.

Das weichelastisch verformbare Rückstellelement kann auch aus dem ersten Kunststoffmaterial des Profilkörpers gebildet sein, wobei dieses vorzugsweise geschäumt ausgebildet ist.

Die Rastausnehmung kann mindestens eine Hinterschneidung aufweisen, die der Widerhaken hintergreift. Das Rückstellelement kann hierbei die Hinterschneidung zu wenigstens 50 %, vorzugsweise wenigstens 70 %, weiter vorzugsweise wenigstens 90 %, ausfüllen. Bevorzugt füllt das Rückstellelement die Hinterschneidung vollständig aus.

Das Rückstellelement kann eine Querschnittsdicke aufweisen, die wenigstens 1,2 fach größer ist als die maximale Eindringtiefe des Widerhakens. Dies gewährleistet eine ausreichende Dämpfungswirkung des komprimierten Rückstellelementes im Bereich des Widerhakens.

Über die Härte, also den mechanische Widerstand, den ein Werkstoff der mechanischen Eindringung eines härteren Prüfkörpers entgegensetzt, des Rückstellelementes kann die Montagekraft und/oder die Demontagekraft des Anschlusselementes vorteilhafterweise an die entsprechende Anwendung angepasst werden. Eine niedrige Härte des Rückstellementes resultiert dann insbesondere in einer geringeren Montagekraft. In diesem Zusammenhang kann auch ein mehrschichtiges Rückstellelement vorgesehen sein, dass eine weiche und eine im Vergleich dazu härtere Schicht aufweist. Die Montagekraft oder die Demontagekraft weist dann, in Abhängigkeit zu dem Eindringzeitpunkt des Anschlusselementes in diese Schichten, variierende Werte auf. Bevorzugt ist die weichere der wenigstens zwei Schichten der Rastausnehmung zugewandt.

Vorzugsweise weist der Profilkörper ein Dichtelement auf, wobei das Dichtelement so ausgebildet und angeordnet ist, dass es im Montagezustand die Fahrzeugscheibe und das Anbauteil zueinander dichtet. Ein entsprechendes Dichtelement dient insbesondere zur flächenbündigen Abdichtung der Unterkante einer Fahrzeugscheibe und des oberen Randes eines Anbauteils (z. B. einer Wasserkastenabdeckung), wobei das Profilelement, die Fahrzeugscheibe und das Anbauteil so aufeinander abgestimmt sind, dass sich auf der Außenseite (Sichtseite des Fahrzeuges) ein im Wesentlichen glatter und flächenbündiger Übergang zwischen der Fahrzeugscheibe, dem Dichtelement und dem Anbauteil ergibt. Typischerweise wird als Kunststoffmaterial für den Profilkörper ein Polypropylen (PP), Polyvinylchlorid (PVC), Acrylnitril-Butadienstyrol (ABS), Ethylen-Propylen-Dien-Kautschuk (EPDM), ein thermoplastisches Elastomer (TPE) und / oder eine Kombination davon verwendet.

Der Befestigungsabschnitt kann ein an die Fahrzeugscheibe angrenzendes Klebeband oder eine an die Fahrzeugscheibe angrenzende Klebstoffschicht aufweisen. Bevorzugt wird hierbei ein doppelseitiges Klebeband verwendet. Alternativ erfolgt die Befestigung des Befestigungsabschnittes durch einen im Querschnitt U-förmig ausgebildeten Befestigungsabschnitt, welcher die entsprechende Kante einer Fahrzeugscheibe klemmend umgreift.

Bevorzugt handelt es sich bei dem Anbauteil um eine Wasserkastenabdeckung.

Das Profilelement kann ferner einen Verstärkungseinleger aufweisen. Vorzugsweise besteht der Verstärkungseinleger aus einem metallischen Werkstoff oder einem, weiter vorzugsweise partikel- oder faserverstärktem, thermoplastischen Werkstoff. Die vorgenannten Verstärkungseinleger können sich insbesondere im Bereich des Befestigungsabschnitts und/oder des Aufnahmeabschnittes befinden.

Das Profilelement des erfindungsgemäßen Systems lässt sich im Wege der Extrusion oder der Ko-Extrusion herstellen. Unter einer Ko-Extrusion wird das Zusammenführen artgleicher oder fremdartiger Kunststoffschmelzen und/oder von Verstärkungseinlegern vor und/oder nach dem Verlassen einer Profildüse eines oder mehrerer Extrusionswerkzeuge verstanden.

Die Erfindung umfasst ferner eine Anordnung mit einem erfindungsgemäßen System und einer mit dem Profilkörper über den Befestigungsabschnitt verbundenen Fahrzeugscheibe.

Die Erfindung betrifft ferner ein Verfahren zum Montieren eines Anbauteils, vorzugsweise mittels eines erfindungsgemäßen Systems, an eine Fahrzeugscheibe, umfassend die folgenden Schritte:
- Befestigen eines Profilelements mit einem extrudierten Profilkörper aus einem ersten Kunststoffmaterial mittels eines an dem Profilkörper vorgesehenen Befestigungsabschnittes,
- Verbinden eines an dem Befestigungsabschnitt angrenzenden Aufnahmeabschnittes des Profilkörpers mit einem Anschlusselement des Anbauteils, wobei das Anschlusselement mindestens einen Widerhaken aufweist und wobei der Aufnahmeabschnitt eine Rastausnehmung zur kraft- und / oder formschlüssigen Aufnahme des Anschlusselementes aufweist,
- wobei innerhalb der Rastausnehmung mindestens ein weichelastisch verformbares Rückstellelement derart angeordnet und ausgebildet ist, dass beim Verbinden des Aufnahmeabschnittes mit dem Anschlusselement der Widerhaken das Rückstellelement verformt, so dass das Rückstellelement den Widerhaken übergreift und eine formschlüssige Aufnahme für den Widerhaken ausbildet.

Durch die erfindungsgemäße Rückformung des Rückstellelementes nach der Verformung durch den Widerhaken, bildet der Widerhaken quasi selbstständig seine eigene formschlüssige Aufnahme aus.

Bevorzugt besteht das Rückstellelement hierbei aus einem geschäumten zweiten Kunststoffmaterial bzw. ist aus diesem geschäumten zweiten Kunststoffmaterial gebildet. Beispiele für ein derartig geschäumtes zweitens Kunststoffmaterial sind vorstehend bereits erläutert.

Weiter bevorzugt weist die Rastausnehmung mindestens eine Hinterschneidung auf, die der Widerhaken hintergreift. Das Rückstellelement kann hierbei die Hinterschneidung zu wenigstens 50 %, vorzugsweise wenigstens 70 %, weiter vorzugsweise wenigstens 90 %, ausfüllen. Bevorzugt füllt das Rückstellelement die Hinterschneidung vollständig aus.

Im Folgenden wird die Erfindung anhand lediglich Ausführungsbeispiele darstellender Zeichnungen erläutert. Es zeigen schematisch:
- Fig. 1a, b: eine Querschnittdarstellung eines ersten erfindungsgemäßen Systems vor und nach dem Verbinden des Anbauteils mit dem Profilelement,
- Fig. 2a, b: eine Querschnittdarstellung eines weiteren erfindungsgemäßen Systems vor und nach dem Verbinden des Anbauteils mit dem Profilelement.

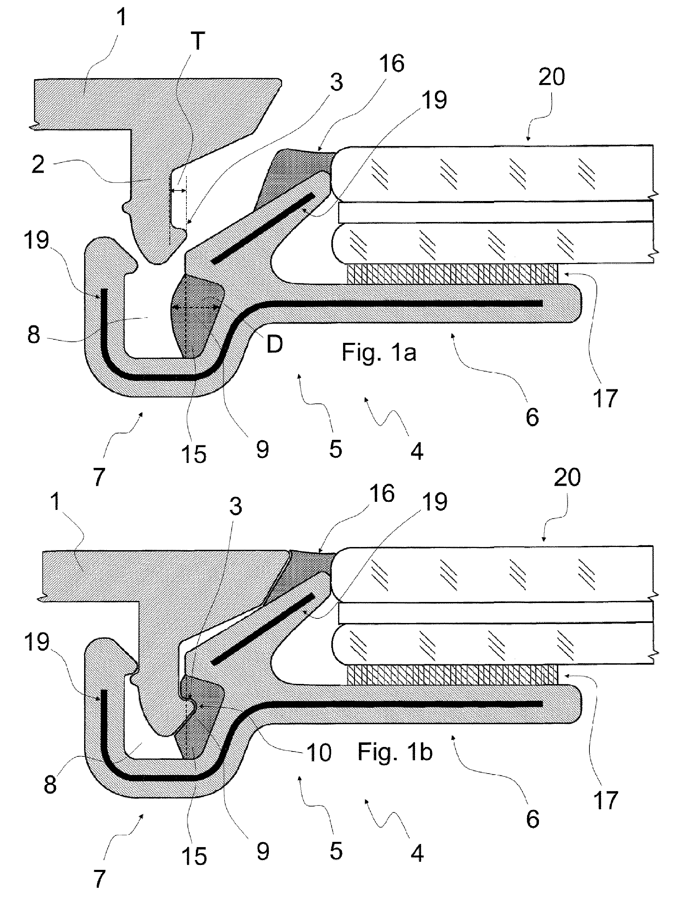

Die Fig. 1 a zeigt eine Querschnittdarstellung eines ersten erfindungsgemäßen Systems vor dem Verbinden eines Anbauteils 1 mit einem Profilelement 4. Das System zum Montieren eines Anbauteils 1 an eine Fahrzeugscheibe 20 umfasst ein Anbauteil 1 mit einem Anschlusselement 2, wobei das Anschlusselement 2 mindestens einen Widerhaken 3 aufweist. Das System umfasst ferner ein Profilelement 4 mit einem extrudierten Profilkörper 5 aus einem ersten Kunststoffmaterial, wobei der Profilkörper 5 einen Befestigungsabschnitt 6 zur Befestigung des Profilkörpers 5 an der Fahrzeugscheibe 20 - hier an der Unterseite der Fahrzeugscheibe 20 - und einen an den Befestigungsabschnitt 6 angrenzenden Aufnahmeabschnitt 7 aufweist. Der Aufnahmeabschnitt 7 weist eine Rastausnehmung 8 zur kraft- und / oder formschlüssigen Aufnahme des Anschlusselements 2 auf. Innerhalb der Rastausnehmung 8 ist ein weichelastisch verformbares Rückstellelement 9 angeordnet, wobei dieses so ausgebildet ist, dass das Rückstellelement 9 bei der Montage des Anschlusselements 2 den Widerhaken 3 übergreift und eine formschlüssige Aufnahme 10 für den Widerhaken 3 ausbildet. Ein entsprechend verbundenes System ist in Fig. 1b dargestellt. Das Rückstellelement 9 weist eine Querschnittsdicke D auf, die wenigstens 1,2 fach größer ist als die maximale Eindringtiefe T des Widerhakens 3.Das Rückstellelement 6 ist aus einem geschäumten zweiten Kunststoffmaterial gebildet. Die Rastausnehmung 8 weist eine Hinterschneidung 15 (Hinterschneidung durch vertikale gestrichelte Linie in den Fig. 1a bis 2b dargestellt) auf, die der Widerhaken 3 hintergreift und das Rückstellelement 9 füllt diese Hinterschneidung zu wenigstens 50 % aus. Wie in diesem Ausführungsbeispiel dargestellt füllt das Rückstellelement 9 diese Hinterschneidung 15 vollständig aus. Der Profilkörper 5 weist ein Dichtelement 16 auf, wobei das Dichtelement 16 so ausgebildet und angeordnet ist, dass es im Montagezustand die Fahrzeugscheibe 20 und das Anbauteil 1 zueinander dichtet (vgl. Fig. 1 b). Das Dichtelement 16 besteht aus dem gleichen Kunststoffmaterial wie das Rückstellelement 9. Das Dichtelement 16 dient zur flächenbündigen Abdichtung der Unterkante der Fahrzeugscheibe 20 und des oberen Randes des Anbauteils 1, wobei das Profilelement 4, die Fahrzeugscheibe 20 und das Anbauteil 1 so aufeinander abgestimmt sind, dass sich auf der Außenseite (entspricht der Außensichtseite im Montagezustand am Fahrzeug) ein im Wesentlichen glatter und flächenbündiger Übergang zwischen der Fahrzeugscheibe 20, dem Dichtelement 16 und dem Anbauteil 1 ergibt. Der Befestigungsabschnitt 6 weist ein im Montagezustand an die Fahrzeugscheibe 20 angrenzendes Klebeband 17 oder eine an die Fahrzeugscheibe 20 angrenzende Klebstoffschicht 17 auf. Bei dem hier gezeigten Anbauteil 1 handelt es sich um eine Wasserkastenabdeckung. Das Profilelement 4 weist zwei Verstärkungseinleger 19 in Form von AluminiumProfilen auf. Ein Verfahren zum Montieren des Anbauteils 1 an einer Fahrzeugscheibe 20, welches sich aus den Figuren 1a und 1b erschließt, umfasst die folgenden Schritte: Befestigen eines Profilelements 4 mit einem extrudierten Profilkörper 5 aus einem ersten Kunststoffmaterial mittels eines an dem Profilkörper 5 vorgesehenen Befestigungsabschnittes 6,

Verbinden eines an den Befestigungsabschnitt 6 angrenzenden Aufnahmeabschnittes 7 des Profilkörpers 5 mit einem Anschlusselement 2 des Anbauteils 1, wobei das Anschlusselement 2 mindestens einen Widerhaken 3 aufweist und wobei der Aufnahmeabschnitt 7 eine Rastausnehmung 8 zur kraft- und / oder formschlüssigen Aufnahme des Anschlusselements aufweist, wobei innerhalb der Rastausnehmung 8 mindestens ein weichelastisch verformbares Rückstellelement 9 derart angeordnet und ausgebildet ist, dass beim Verbinden des Aufnahmeabschnittes 7 mit dem Anschlusselement 2 der Widerhaken 3 das Rückstellelement 9 verformt, so dass das Rückstellelement 9 den Widerhaken 3 übergreift und eine formschlüssige Aufnahme 10 für den Widerhaken 3 ausbildet.

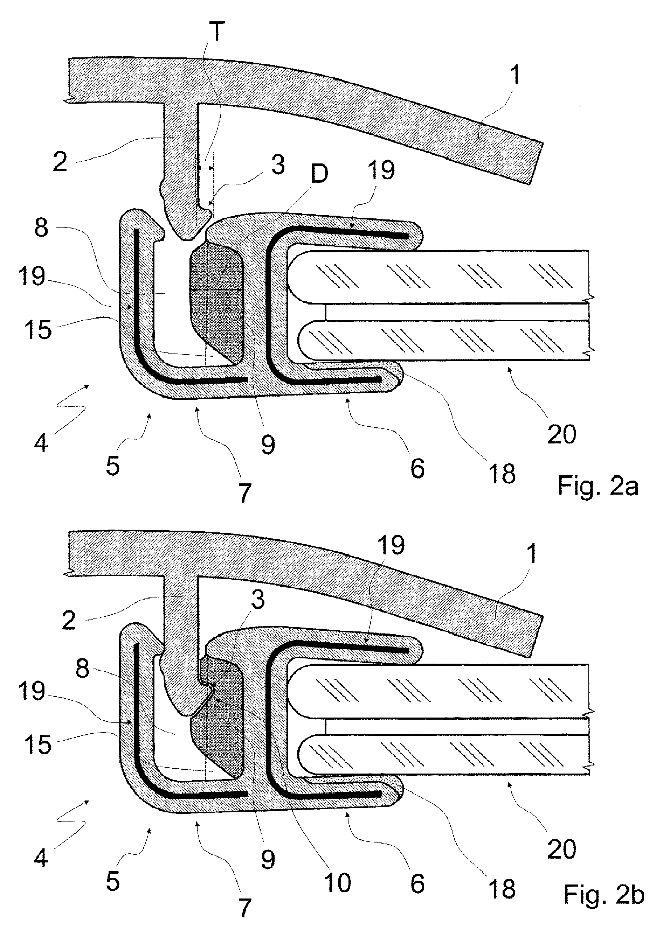

Die Fig. 2a zeigt eine Querschnittdarstellung eines weiteren erfindungsgemäßen Systems vor dem Verbinden eines Anbauteils 1 mit einem Profilelement 4 und die Fig. 2b nach dem Verbinden des Anbauteils 1 mit dem Profilelement 4. Im Vergleich zu dem vorstehenden Ausführungsbeispiel ist der Befestigungsabschnitt 6 hier jedoch durch einen im Querschnitt U-förmigen Profilabschnitt gebildet, welcher den Randbereich der Fahrzeugscheibe 20 klemmend übergreift. Zur besseren Haftung, sowie zur Abdichtung gegenüber eintretendem Wasser, ist der Befestigungsabschnitt 6 im Bereich der Kontaktfläche zu der Fahrzeugscheibe 20 jeweils mit einem Dichtungsmaterial 18 versehen. Das Dichtungsmaterial 18 kann aus dem gleichen Kunststoffmaterial gebildet sein wie das Rückstellelement 9. Bei dem Anbauteil 1 handelt es sich ebenfalls um eine Wasserkastenabdeckung. Der U-förmige Profilabschnitt ist durch das Anbauteil 1 selbst verdeckt, so dass - im Vergleich zu vorstehendem Ausführungsbeispiel - auch kein zusätzliches Dichtelement notwendig ist. Die Rastausnehmung 8 weist eine Hinterschneidung 15 auf, die der Widerhaken 3 hintergreift und das Rückstellelement 9 füllt diese Hinterschneidung zu wenigstens 70 % aus. Die Funktion, das Montageverfahren und die weiteren Komponenten dieses Ausführungsbeispiels eines erfindungsgemäßen Systems ergeben sich analog zu dem Ausführungsbeispiel in den Fig. 1a und 1 b.

## Patentansprüche

1. System zum Montieren eines Anbauteils (1) an eine Fahrzeugscheibe (20), umfassend:
- ein Anbauteil (1) mit einem Anschlusselement (2), wobei das Anschlusselement (2) mindestens einen Widerhaken (3) aufweist,
- ein Profilelement (4) mit einem extrudierten Profilkörper (5) aus einem ersten Kunststoffmaterial, wobei der Profilkörper (5) einen Befestigungsabschnitt (6) zur Befestigung des Profilkörpers (5) an der Fahrzeugscheibe (20) und einen an den Befestigungsabschnitt (6) angrenzenden Aufnahmeabschnitt (7) aufweist, wobei der Aufnahmeabschnitt (7) eine Rastausnehmung (8) zur kraft- und/oder formschlüssigen Aufnahme des Anschlusselementes (2) aufweist,
**dadurch gekennzeichnet, dass**
innerhalb der Rastausnehmung (8) mindestens ein weichelastisch verformbares Rückstellelement (9) derart angeordnet und ausgebildet ist, dass das Rückstellelement (9) bei der Montage des Anschlusselementes (2) den Widerhaken (3) übergreift und eine formschlüssige Aufnahme (10) für den Widerhaken (3) ausbildet.

2. System nach Anspruch 1, **dadurch gekennzeichnet, dass** das Rückstellelement (9) aus einem geschäumten zweiten Kunststoffmaterial gebildet ist.

3. System nach einem der Ansprüche 1 oder 2, **dadurch gekennzeichnet, dass** die Rastausnehmung (8) mindestens eine Hinterschneidung (15) aufweist, die der Widerhaken (3) hintergreift und das Rückstellelement (9) die Hinterschneidung (15) zu wenigstens 50 Prozent, vorzugsweise wenigstens 70 Prozent, ausfüllt.

4. System nach einem der vorstehenden Ansprüche, **dadurch gekennzeichnet, dass** das Rückstellelement (9) eine Querschnittsdicke (D) aufweist, die wenigstens 1,2 fach größer ist als die maximale Eindringtiefe (T) des Widerhakens (3).

5. System nach einem der vorstehenden Ansprüche, **dadurch gekennzeichnet, dass** der Profilkörper ein Dichtelement (16) aufweist, wobei das Dichtelement (16) so ausgebildet und angeordnet ist, dass es im Montagezustand die Fahrzeugscheibe (20) und das Anbauteil (1) zueinander dichtet.

6. System nach einem der vorstehenden Ansprüche, **dadurch gekennzeichnet, dass** der Befestigungsabschnitt (6) ein im Montagezustand an die Fahrzeugscheibe (20) angrenzendes Klebeband (17) oder eine an die Fahrzeugscheibe (20) angrenzende Klebstoffschicht (17) aufweist.

7. System nach einem der vorstehenden Ansprüche, **dadurch gekennzeichnet, dass** das Anbauteil (1) eine Wasserkastenabdeckung ist.

8. Anordnung mit einem System nach einem der der Ansprüche 1 bis 7, und einer mit dem Profilkörper (5) über den Befestigungsabschnitt (6) verbundenen Fahrzeugscheibe (20).

9. Verfahren zum Montieren eines Anbauteils (1) an eine Fahrzeugscheibe, umfassend die folgenden Schritte:
- Befestigen eines Profilelements (4) mit einem extrudierten Profilkörper (5) aus einem ersten Kunststoffmaterial mittels eines an dem Profilkörper (5) vorgesehenen Befestigungsabschnittes (6),
- Verbinden eines an den Befestigungsabschnitt (6) angrenzenden Aufnahmeabschnittes (7) des Profilkörpers (5) mit einem Anschlusselement (2) des Anbauteils (1), wobei das Anschlusselement (2) mindestens einen Widerhaken (3) aufweist und wobei der Aufnahmeabschnitt (7) eine Rastausnehmung (8) zur kraft- und/oder formschlüssigen Aufnahme des Anschlusselementes (2) aufweist,
- wobei innerhalb der Rastausnehmung (8) mindestens ein weichelastisch verformbares Rückstellelement (9) derart angeordnet und ausgebildet ist, dass beim Verbinden des Aufnahmeabschnittes (7) mit dem Anschlusselement (2) der Widerhaken (3) das Rückstellelement (9) verformt, so dass das Rückstellelement (9) den Widerhaken (3) übergreift und eine formschlüssige Aufnahme (10) für den Widerhaken (3) ausbildet.

10. Verfahren nach Anspruch 9, **dadurch gekennzeichnet, dass** das Rückstellelement (9) aus einem geschäumten zweiten Kunststoffmaterial gebildet ist.
